# EUROPÄISCHE PATENTSCHRIFT

(11) **EP 3 181 377 B1**
(45) Veröffentlichungstag und Bekanntmachung des Hinweises auf die Patenterteilung: **25.07.2018**
(21) Anmeldenummer: 16189925.7
(22) Anmeldetag: 21.09.2016
(51) Int. Cl.: B60C 11/03, B60C 11/13, B60C 11/12

(54) **FAHRZEUGLUFTREIFEN**
PNEUMATIC TYRES FOR A VEHICLE
PNEUMATIQUES DE VÉHICULE

(30) Priorität: 18.12.2015 DE 102015225940
(43) Veröffentlichungstag der Anmeldung: 21.06.2017
(73) Patentinhaber: Continental Reifen Deutschland GmbH, 30165 Hannover (DE)
(72) Erfinder: Behr, Ulrich, 30167 Hannover (DE); Jacob, Matthias, 04107 Leipzig (DE)
(74) Vertreter: Finger, Karsten

(56) Entgegenhaltungen:
- EP-A1- 2 636 544
- DE-A1-102012 108 383
- US-A1- 2013 220 499

## Beschreibung

Die Erfindung betrifft einen Fahrzeugluftreifen in Radialbauart mit einem Laufstreifen mit zumindest einem beidseitig durch je eine Umfangsrille begrenzten Profilband, welches über seinen Umfang mit einer Vielzahl von innerhalb des Profilbandes verlaufenden Einschnitten versehen ist, welche eine Breite von 0,4 mm bis 1,5 mm und an ihrer tiefsten Stelle eine Tiefe von 3,0 mm bis 5,0 mm aufweisen, wobei jeder Einschnitt durch einen Einschnittgrund und zwei Einschnittwände begrenzt ist.

Es ist bekannt und üblich, Laufstreifen von Fahrzeugluftreifen mit schmalen Rillen oder Einschnitten verschiedenster Ausgestaltungen zu versehen, um dem Reifen einen guten Nassgriff zu verleihen. Derartige Einschnitte oder Rillen können innerhalb der Profilbänder auslaufen oder enden.

Ein Reifen der eingangs genannten Art ist beispielsweise aus der DE 10 2012 104 468 A1 bekannt. Der Reifen weist einen Laufstreifen mit im mittleren Laufstreifenbereich in Umfangsrichtung umlaufenden Profilbändern auf, welche mit innerhalb der Profilbänder endenden Einschnitten versehen sind. Jeder Einschnitt verläuft in Draufsicht V-förmig und weist eine Tiefe auf, die geringer ist als die maximal vorgesehene Profiltiefe. Diese Einschnitte sollen zu einer Verbesserung der Nassgriffeigenschaften beitragen.

Aus der DE 1 480 982 A ist ein weiterer Fahrzeugluftreifen, dessen Laufstreifen in seinem mittleren Bereich mit Einschnitten versehene Profilbänder aufweist, bekannt. Jeder Einschnitt weist eine konstante Tiefe auf, welche im Wesentlichen der maximal vorgesehenen Profiltiefe, insbesondere zirka 90% der Profiltiefe, entspricht. Die an der Laufstreifenoberfläche ermittelte Breite jedes Einschnitts beträgt 0,2 mm bis 1,2 mm.

Ein weiterer mit Einschnitten versehene Profilbänder aufweisender Laufstreifen, welcher für Schwerlastreifen vorgesehen ist, ist aus der US 2007 015 1 646 A1 bekannt. Die Profilbänder sind mit in Draufsicht unterschiedlich verlaufenden Einschnitten versehen Jeder Einschnitt weist an der Laufstreifenoberfläche eine Breite von 0,3 mm bis 1,0 mm und in radialer Richtung eine Tiefe von 50% bis 100% der Profiltiefe auf.

Ferner ist aus der DE 10 2012 108 383 A1, auf der der Oberbegriff von Anspruch 1 basiert, ein Fahrzeugluftreifen mit einem Laufstreifen bekannt, welcher mit in Rillengruppen angeordneten Rillen einer Breite von 0,8 mm bis 1,5 mm versehen ist. Jede Rillengruppe ist aus drei Rillen gebildet, welche von einem vertieften Zentralbereich ausgehend analog zu den Zacken eines regulären Sterns verlaufen. An den Rillenwänden sind vorzugsweise Fasen ausgebildet.

Es ist bekannt, dass Laufstreifen, welche entlang des Laufstreifenzenites ein Profilband mit Einschnitten aufweisen, besonders sensibel gegenüber Anregungen von hörbarem Schall sind, sodass in diesem Bereich befindliche Einschnitte und Rillen besonders stark zur Geräuschemission des Reifens beim Abrollen beitragen. Auf Einschnitte in diesem Bereich kann jedoch nicht verzichtet werden, um die Nassgriffeigenschaften zu unterstützen und eine gute laterale Steifigkeit zu gewährleisten und auch die Umfangssteifigkeit des Profilbandes optimal einstellen zu können.

Der Erfindung liegt daher die Aufgabe zu Grunde, einen Reifen der eingangs genannten Art diesbezüglich zu verbessern, um insbesondere das Abrollgeräusch zu reduzieren, wobei weiterhin gute Nassgriffeigenschaften erhalten bleiben sollen.

Die gestellte Aufgabe wird erfindungsgemäß dadurch gelöst, dass sich jeder Einschnitt über seine Längserstreckung in Draufsicht gebogen erstreckt, wobei die eine Einschnittwand bogenaußenseitig und die andere Einschnittwand bogeninnenseitig verläuft, wobei sich die bogenaußenseitige Einschnittwand bis zur Profilbandoberfläche erstreckt und an einer gemäß der Bogenform des Einschnittes verlaufenden Einschnittkante endet, wobei sich die bogeninnenseitige Einschnittwand aus einem an den Einschnittgrund anschließenden Wandabschnitt und einer Fase zusammensetzt, wobei der Wandabschnitt bis zu einer in Draufsicht parallel zur gebogenen Einschnittkante verlaufenden weiteren gebogenen Einschnittkante reicht, welche gleichzeitig zwischen den Einschnittenden einen leicht gebogenen Tiefenverlauf aufweist und die Fase zum Wandabschnitt begrenzt, und wobei die Fase an der Profilbandoberfläche von einer geraden zwischen den Enden der weiteren gebogenen Einschnittkante verlaufenden Einschnittkante begrenzt ist.

Die erfindungsgemäß bogenförmig ausgeführten und mit speziell gestalteten Fasen versehenen Einschnitte werden beim Durchlaufen der Bodenaufstandsfläche gegenüber gerade verlaufenden Einschnitten deutlich weniger "aufgeklappt", sodass hörbaren Schall zur Folge habende Anregungen deutlich reduziert werden. Die Fase verhindert ein Einrollen der Einschnittkante beim Bremsen und unterstützt die Wasserableitung von der Oberfläche des Profilbandes in den Einschnitt, sodass gute Nassgriffeigenschaften gewährleistet sind.

Gemäß einer bevorzugten Ausführungsform der Erfindung verläuft die Fase der bogeninnenseitigen Einschnittwand zur radialen Richtung unter einem konstanten Winkel von 35° bis 55°, insbesondere von 40° bis 50°. Mit einer derart ausgestalteten Fase lässt sich der Einrolleffekt besonders wirkungsvoll verhindern.

Die laterale Steifigkeit und die Umfangssteifigkeit des Profilbandes lassen sich besonders gut einstellen, wenn die Fasen an den beiden Einschnittenden auslaufen und wenn die Fasen an ihren breitesten Stellen eine Breite von 1,5 mm bis 2,0 mm aufweisen. In diesem Zusammenhang ist auch die Erstreckungsrichtung der Einschnitte im Profilband von Bedeutung. Besonders vorteilhaft ist es, wenn jeder Einschnitt, bezogen auf eine die beiden Einschnittenden miteinander verbindenden Gerade, zur axialen Richtung unter einem Winkel von 35° bis 55°, vorzugsweise von 40° bis 50°, verläuft.

Eine weitere, für die Steifigkeit des Profilbandes und gute Nassgriffeigenschaften günstige Maßnahme besteht darin, dass der Einschnittgrund im Längsschnitt des Einschnittes flach V-förmig verläuft und an der V-Spitze seine tiefste Stelle aufweist, wobei der Einschnittgrund vorzugsweise zwei von seiner tiefsten Stelle ausgehende zur Profilbandoberfläche kontinuierlich ansteigende Grundabschnitte aufweist, welche zur radialen Richtung jeweils unter einem Winkel von 50° bis 70°, vorzugsweise von 60° bis 65°, verlaufen.

Bevorzugt weisen ferner die Einschnitte in Umfangsrichtung gegenseitige Abstände von 20,0 mm bis 30,0 mm aufweisen, wobei diese Abstände an den jeweils gleich positionierten Enden der Einschnitte in Umfangsrichtung ermittelt werden.

Weitere Merkmale, Vorteile und Einzelheiten der Erfindung werden nun anhand der Zeichnung, die schematisch ein Ausführungsbeispiel der Erfindung darstellt, näher beschrieben. Dabei zeigen
Fig. 1 eine Draufsicht auf einen Umfangsabschnitt eines Profilbandes eines Laufstreifens eines Fahrzeugluftreifens mit einer Ausführungsvariante der Erfindung und
Fig. 2 bis Fig. 4 Schnittdarstellungen entlang der Linien II-II bis IV-IV der Fig. 1.

Erfindungsgemäß ausgeführte Fahrzeugluftreifen sind insbesondere Reifen in Radialbauart für Personenkraftwagen oder Vans.

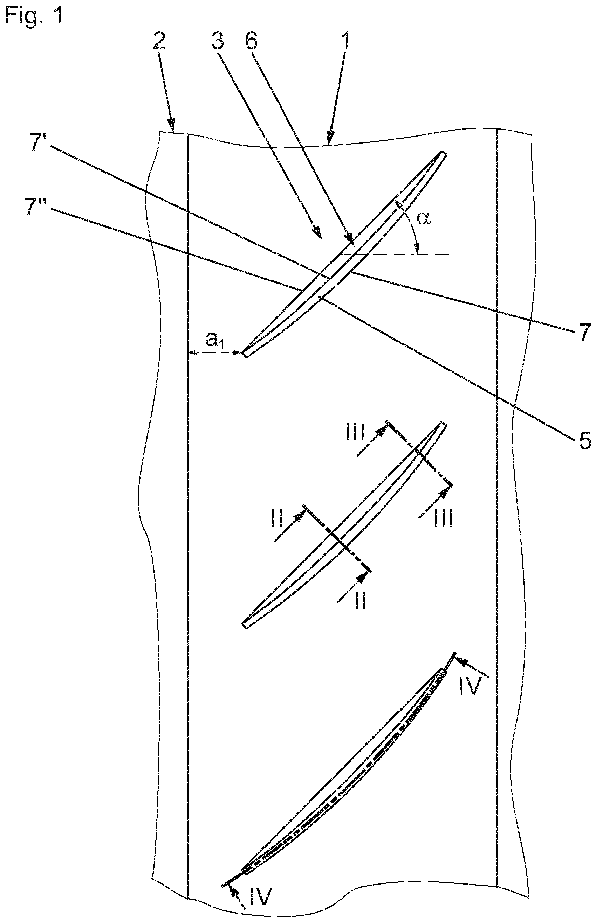

In Fig. 1 ist von einem Laufstreifen eines Fahrzeugluftreifens ein Umfangsabschnitt eines im mittleren Laufstreifenbereich umlaufenden Profilbandes 1, welches beidseitig durch je eine beim gezeigten Ausführungsbeispiel gerade verlaufende Umfangsrille 2 begrenzt ist, dargestellt. Ein derartiges Profilband 1 ist vorzugsweise im Zenit des Laufstreifens angeordnet, wobei ein Laufstreifen auch zwei oder drei durch Umfangsrillen 2 voneinander gentrennte Profilbänder 1 aufweisen kann.

Das Profilband 1 ist über seinen Umfang mit einer Vielzahl von im Wesentlichen parallel zueinander verlaufenden Einschnitten 3 versehen, welche innerhalb des Profilbandes 1 mittig positioniert sind und in Umfangsrichtung voneinander im Wesentlichen gleichgroße gegenseitige Abstände von vorzugsweise 20,0 mm bis 30,0 mm aufweisen. Die Einschnitte 3 enden vor den das Profilband 1 begrenzenden Umfangsrillen 2 in axialer Richtung jeweils in einem Abstand a₁ von 2,0 mm bis 5,0 mm. In Draufsicht verläuft jeder Einschnitt 3 leicht bogenförmig und bezogen auf eine die beiden Einschnittenden miteinander verbindende Gerade unter einem Winkel α zur axialen Richtung, welcher 35° bis 55°, vorzugsweise 40° bis 50°, insbesondere zirka 45°, beträgt.

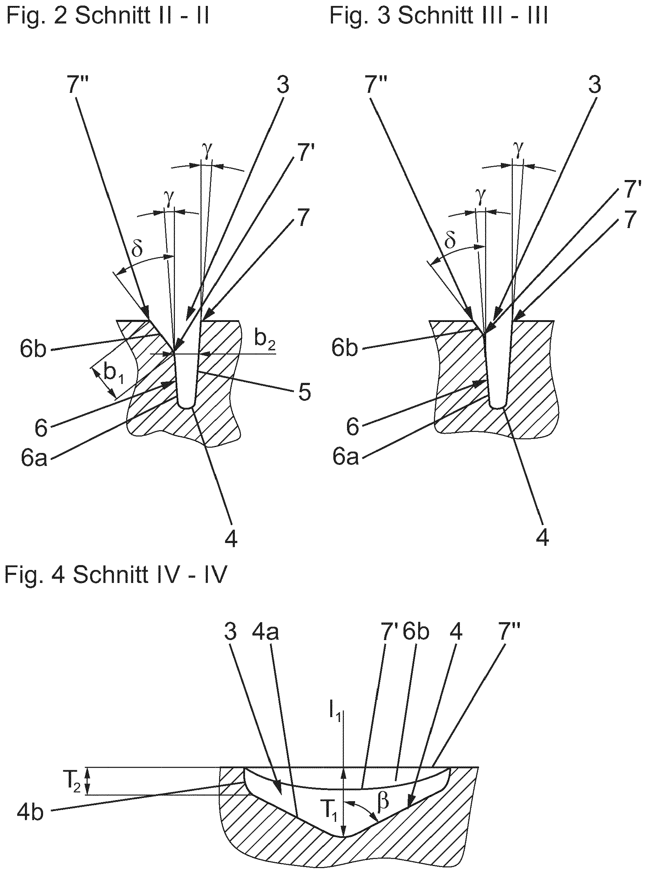

Jeder Einschnitt 3 ist durch einen Einschnittgrund 4 (Fig. 2 bis Fig. 4), eine bogenaußenseitige Einschnittwand 5 und eine bogeninnenseitige Einschnittwand 6 (Fig. 1 bis Fig. 3) begrenzt.

Wie der Längsschnitt durch den Einschnitt 3 in Fig. 4 zeigt, ist der Einschnittgrund 4 bezüglich einer im Längsschnitt durch die Mitte des Einschnittes 3 in radialer Richtung verlaufenden Linie L₁ spiegelsymmetrisch ausgeführt und verläuft flach-V-förmig, sodass der Einschnitt 3 in seiner Mitte in radialer Richtung seine größte Tiefe T₁ aufweist, die 3,0 mm bis 5,0 mm beträgt. Der Einschnittgrund 4 weist zwei von der tiefsten Stelle in Richtung Profilbandoberfläche ansteigende Grundabschnitte 4a und bei der Profilbandoberfläche Übergangsabschnitte 4b auf. Die über einen gerundeten Verbindungsabschnitt aneinander anschließende Grundabschnitte 4a verlaufen jeweils gerade sowie zur radialen Richtung unter einem Winkel β, welcher 50° bis 70°, vorzugsweise 60° bis 65°, beträgt. In einer Tiefe T₂ von 0,5 mm bis 1,0 mm schließen die im Längsschnitt im Wesentlichen in radialer Richtung sowie leicht bogenförmig verlaufenden Übergangsabschnitte 4b an die Grundabschnitte 4a an.

Gemäß Fig. 2 und Fig. 3 verläuft die bogenaußenseitige Einschnittwand 5 zur radialen Richtung unter einem Winkel γ von bis zu 10°, vorzugsweise von 2° bis 5°, bis zu einer den Einschnitt 3 an der Oberfläche des Profilbandes 1 begrenzenden und in Draufsicht leicht bogenförmigen Einschnittkante 7 (Fig. 1). Die bogeninnenseitige Einschnittwand 6 setzt sich in radialer Richtung aus einem unmittelbar an den Einschnittgrund 4 anschließenden radial inneren Wandabschnitt 6a und einer zur Profilbandoberfläche verlaufenden Fase 6b zusammen. Zwischen dem Wandabschnitt 6a und der Einschnittwand 5 weist jeder Einschnitt 3 eine Breite b₂ von 0,4 mm bis 1,5 mm auf (Fig. 2). Der Übergang zwischen der Fase 6b und dem Wandabschnitt 6a erfolgt entlang einer abgerundeten Einschnittkante 7', welche in Draufsicht bogenförmig und parallel zur Einschnittkante 7 verläuft (Fig. 1). Die Einschnittkante 7' verläuft ferner über die Längserstreckung des Einschnittes 3 in den Einschnitt 3 bogenförmig hinein, ihre tiefste Stelle befindet sich bei der tiefsten Stelle des Einschnittgrundes 4, und verläuft bezüglich der Linie l₁ im Wesentlichen spiegelsymmetrisch (Fig. 4).

Gemäß Fig. 2 bis Fig. 4 erstreckt sich daher die Fase 6b zwischen der bogenförmigen Einschnittkante 7' und einer die Fase 6b an der Profilbandoberfläche begrenzenden in Draufsicht im Wesentlichen gerade zwischen den Enden der bogenförmigen Einschnittkante 7' verlaufenden Einschnittkante 7".

Wie Fig. 2 und Fig. 3 zeigen, ist die Fase 6b gegenüber der radialen Richtung unter einem konstanten Winkel δ von 35° bis 55°, vorzugsweise von 40° bis 50°, insbesondere von zirka 45° geneigt. Gemäß Fig. 1 und Fig. 4 läuft die Fase 6b entsprechend des Tiefenverlaufes der bogenförmigen Einschnittkante 7' an den beiden Enden des Einschnittes 3 aus und weist in ihrer Mitte ihre größte Breite b₁ von 1,5 mm bis 2,0 mm auf (Fig. 2). Die Breite der Fase 6b korreliert daher mit der Tiefe des Einschnittes 3 derart, dass die Breite b₁ mit abnehmender Tiefe ebenfalls geringer wird.

Bei einer weiteren Ausführungsvariante verlaufen die Abschnitte 4a des Einschnittgrundes 4 jeweils bis zur Profilbandoberfläche.

### Bezugsziffernliste

- 1: Profilband
- 2: Umfangsrille
- 3: Einschnitt
- 4: Einschnittgrund
- 4a: Abschnitt
- 4b: Übergangsabschnitt
- 5, 6: Einschnittwand
- 6a: Wandabschnitt
- 6b: Fase
- 7, 7',7": Einschnittkante
- α, β, γ, δ: Winkel

## Patentansprüche

1. Fahrzeugluftreifen in Radialbauart mit einem Laufstreifen mit zumindest einem beidseitig durch je eine Umfangsrille (2) begrenzten Profilband (1), welches über seinen Umfang mit einer Vielzahl von innerhalb des Profilbandes (1) verlaufenden Einschnitten (3) versehen ist, welche eine Breite (b₂) von 0,4 mm bis 1,5 mm und an ihrer tiefsten Stelle eine Tiefe (T₁) von 3,0 mm bis 5,0 mm aufweisen, wobei jeder Einschnitt (3) durch einen Einschnittgrund (4) und zwei Einschnittwände (5, 6) begrenzt ist,
**dadurch gekenzeichnet,**
dass sich jeder Einschnitt (3) über seine Längserstreckung in Draufsicht leicht gebogen erstreckt, wobei die eine Einschnittwand (5) bogenaußenseitig und die andere Einschnittwand (6) bogeninnenseitig verläuft, wobei sich die bogenaußenseitige Einschnittwand (5) bis zur Profilbandoberfläche erstreckt und an einer gemäß der Bogenform des Einschnittes (3) verlaufenden Einschnittkante (7) endet, wobei sich die bogeninnenseitige Einschnittwand (6) aus einem an den Einschnittgrund (4) anschließenden Wandabschnitt (6a) und einer Fase (6b) zusammensetzt, wobei der Wandabschnitt (6a) bis zu einer in Draufsicht parallel zur gebogenen Einschnittkante (7) verlaufenden weiteren gebogenen Einschnittkante (7') reicht, welche gleichzeitig zwischen den Einschnittenden einen leicht gebogenen Tiefenverlauf aufweist und die Fase (6b) zum Wandabschnitt (6b) begrenzt, und wobei die Fase (6b) an der Profilbandoberfläche von einer geraden zwischen den Enden der weiteren gebogenen Einschnittkante (7') verlaufenden Einschnittkante (7") begrenzt ist.

2. Fahrzeugluftreifen nach Anspruch 1, **dadurch gekennzeichnet, dass** die Fase (6b) der bogeninnenseitigen Einschnittwand (6) zur radialen Richtung unter einem konstanten Winkel (δ) von 35° bis 55°, insbesondere von 40° bis 50°, verläuft.

3. Fahrzeugluftreifen nach Anspruch 1 oder 2, **dadurch gekennzeichnet, dass** die Fase (6b) der bogeninnenseitigen Einschnittwand (6) an den beiden Einschnittenden ausläuft.

4. Fahrzeugluftreifen nach einem der Ansprüche 1 bis 3, **dadurch gekennzeichnet, dass** die Fase (6b) der bogeninnenseitigen Einschnittwand (6) an ihrer breitesten Stelle eine Breite (b₁) von 1,5 mm bis 2,0 mm aufweist.

5. Fahrzeugluftreifen nach einem der Ansprüche 1 bis 4, **dadurch gekennzeichnet, dass** jeder Einschnitt (3), bezogen auf eine die beiden Einschnittenden miteinander verbindende Gerade, zur axialen Richtung unter einem Winkel (α) von 35° bis 55°, vorzugsweise von 40° bis 50°, verläuft.

6. Fahrzeugluftreifen nach einem der Ansprüche 1 bis 5, **dadurch gekennzeichnet, dass** der Einschnittgrund (4) im Längsschnitt des Einschnittes (3) flach V-förmig verläuft und an der V-Spitze seine tiefste Stelle aufweist.

7. Fahrzeugluftreifen nach einem der Ansprüche 1 bis 6, **dadurch gekennzeichnet, dass** der Einschnittgrund (4) zwei von seiner tiefsten Stelle ausgehende zur Profilbandoberfläche kontinuierlich ansteigende Grundabschnitte (4a) aufweist, welche zur radialen Richtung jeweils unter einem Winkel (β) von 50° bis 70°, vorzugsweise von 60° bis 65°, verlaufen.

8. Fahrzeugluftreifen nach einem der Ansprüche 1 bis 7, **dadurch gekennzeichnet, dass** die Einschnitte (3) in Umfangsrichtung gegenseitige Abstände von 20,0 mm bis 30,0 mm aufweisen.

9. Fahrzeugluftreifen nach einem der Ansprüche 1 bis 8, **dadurch gekennzeichnet, dass** jeder Einschnitt (3) vor den das Profilband (1) begrenzenden Umfangsrillen (2) in axialer Richtung in einem Abstand (a₁) von 2,0 mm bis 5,0 mm endet.

10. Fahrzeugluftreifen nach einem der Ansprüche 1 bis 9, **dadurch gekennzeichnet, dass** der Laufstreifen bis zu drei Profilbänder (1) aufweist.

11. Fahrzeugluftreifen nach einem der Ansprüche 1 bis 10, **dadurch gekennzeichnet, dass** ein Profilband (1) im Bereich des Laufstreifenzenits verläuft.

## Claims

1. Pneumatic vehicle tyre of a radial type of construction comprising a tread with at least one profile band (1), which is bounded on each of both sides by a circumferential groove (2) and is provided over its circumference with a multiplicity of sipes (3), which run within the profile band (1) and have a width (b₂) of 0.4 mm to 1.5 mm and at their deepest point a depth (T₁) of 3.0 mm to 5.0 mm, each sipe (3) being bounded by a sipe base (4) and two sipe walls (5, 6),
**characterized**
**in that** each sipe (3) extends in a slightly arcuate manner in plan view over its longitudinal extent, the one sipe wall (5) running on the outer side of the arc and the other sipe wall (6) running on the inner side of the arc, the arc-outer-side sipe wall (5) extending up to the surface of the profile band and ending at a sipe edge (7) running according to the arc form of the sipe (3), the arc-inner-side sipe wall (6) being made up of a wall portion (6a) adjoining the sipe base (4) and a bevel (6b), the wall portion (6a) reaching as far as a further arcuate sipe edge (7'), which runs parallel to the arcuate sipe edge (7) in plan view and at the same time has between the ends of the sipe a slightly arcuate depth profile and bounds the bevel (6b) in relation to the wall portion (6b), and the bevel (6b) being bounded at the surface of the profile band by a straight sipe edge (7") running between the ends of the further arcuate sipe edge (7').

2. Pneumatic vehicle tyre according to Claim 1, **characterized in that** the bevel (6b) of the arc-inner-side sipe wall (6) runs in relation to the radial direction at a constant angle (δ) of 35° to 55°, in particular of 40° to 50°.

3. Pneumatic vehicle tyre according to Claim 1 or 2, **characterized in that** the bevel (6b) of the arc-inner-side sipe wall (6) runs out at the two ends of the sipe.

4. Pneumatic vehicle tyre according to one of Claims 1 to 3, **characterized in that** the bevel (6b) of the arc-inner-side sipe wall (6) has at its widest point a width (b₁) of 1.5 mm to 2.0 mm.

5. Pneumatic vehicle tyre according to one of Claims 1 to 4, **characterized in that**, with respect to a straight line joining the two ends of the sipe to one another, each sipe (3) runs in relation to the axial direction at an angle (α) of 35° to 55°, preferably of 40° to 50°.

6. Pneumatic vehicle tyre according to one of Claims 1 to 5, **characterized in that**, in the longitudinal section of the sipe (3), the sipe base (4) runs in a shallow V-shaped form and has its deepest point at the tip of the V.

7. Pneumatic vehicle tyre according to one of Claims 1 to 6, **characterized in that** the sipe base (4) has two base portions (4a) rising continuously from its lowest point to the surface of the profile band, which run in relation to the radial direction respectively at an angle (β) of 50° to 70°, preferably of 60° to 65°.

8. Pneumatic vehicle tyre according to one of Claims 1 to 7, **characterized in that** the sipes (3) have in the circumferential direction mutual spacings of 20.0 mm to 30.0 mm.

9. Pneumatic vehicle tyre according to one of Claims 1 to 8, **characterized in that** each sipe (3) ends in the axial direction at a distance (a₁) of 2.0 mm to 5.0 mm before the circumferential grooves (2) bounding the profile band (1).

10. Pneumatic vehicle tyre according to one of Claims 1 to 9, **characterized in that** the tread has up to three profile bands (1).

11. Pneumatic vehicle tyre according to one of Claims 1 to 10, **characterized in that** one profile band (1) runs in the region of the crown of the tread.

## Revendications

1. Pneumatique de véhicule de type radial avec une bande de roulement avec au moins une bande profilée (1) limitée de part et d'autre chaque fois par une rainure périphérique (2), qui est munie sur sa périphérie d'une multiplicité d'entailles (3) s'étendant à l'intérieur de la bande profilée (1), qui présentent une largeur (b₂) de 0,4 mm à 1,5 mm et à leur endroit le plus profond une profondeur (T₁) de 3,0 mm à 5,0 mm, dans lequel chaque entaille (3) est limitée par un fond d'entaille (4) et deux parois d'entaille (5, 6),
**caractérisé en ce que** chaque entaille (3) s'étend sur son extension longitudinale sous une forme légèrement arquée dans une vue en plan, dans lequel la première paroi d'entaille (5) s'étend sur le côté extérieur de l'arc et l'autre paroi d'entaille (6) s'étend sur le côté intérieur de l'arc, dans lequel la paroi d'entaille (5) sur le côté extérieur de l'arc s'étend jusqu'à la surface de la bande profilée et se termine à une arête d'entaille (7) s'étendant selon la forme arquée de l'entaille (3), dans lequel la paroi d'entaille (6) sur le côté intérieur de l'arc se compose d'une partie de paroi (6a) se raccordant au fond d'entaille (4) et d'un chanfrein (6b), dans lequel la partie de paroi (6a) arrive jusqu'à une autre arête d'entaille arquée (7') s'étendant parallèlement à l'arête d'entaille (7) arquée dans une vue en plan, qui présente simultanément une allure de profondeur légèrement arquée entre les extrémités de l'entaille et limite le chanfrein (6b) vers la partie de paroi (6b), et dans lequel le chanfrein (6b) est limité sur la surface de la bande profilée par une arête d'entaille droite (7") s'étendant entre les extrémités de l'autre arête d'entaille arquée (7').

2. Pneumatique de véhicule selon la revendication 1, **caractérisé en ce que** le chanfrein (6b) de la paroi d'entaille (6) sur le côté intérieur de l'arc s'étend par rapport à la direction radiale sous un angle constant (δ) de 35° à 55°, en particulier de 40° à 50°.

3. Pneumatique de véhicule selon la revendication 1 ou 2, **caractérisé en ce que** le chanfrein (6b) de la paroi d'entaille (6) sur le côté intérieur de l'arc se termine aux deux extrémités de l'entaille.

4. Pneumatique de véhicule selon l'une quelconque des revendications 1 à 3, **caractérisé en ce que** le chanfrein (6b) de la paroi d'entaille (6) sur le côté intérieur de l'arc présente à son endroit le plus large une largeur (b₁) de 1,5 mm à 2,0 mm.

5. Pneumatique de véhicule selon l'une quelconque des revendications 1 à 4, **caractérisé en ce que** chaque entaille (3), rapportée à une droite reliant l'une à l'autre les deux extrémités de l'entaille, s'étend par rapport à la direction radiale sous un angle (α) de 35° à 55°, de préférence de 40° à 50°.

6. Pneumatique de véhicule selon l'une quelconque des revendications 1 à 5, **caractérisé en ce que** le fond d'entaille (4) s'étend dans la coupe longitudinale de l'entaille (3) à plat en forme de V et présente son point le plus profond à la pointe du V.

7. Pneumatique de véhicule selon l'une quelconque des revendications 1 à 6, **caractérisé en ce que** le fond d'entaille (4) présente deux parties de fond (4a) montant en continu vers la surface de la bande profilée à partir de son point le plus profond, qui s'étendent par rapport à la direction radiale sous un angle (β) de 50° à 70°, de préférence de 60° à 65°.

8. Pneumatique de véhicule selon l'une quelconque des revendications 1 à 7, **caractérisé en ce que** les entailles (3) présentent en direction périphérique des distances mutuelles de 20,0 mm à 30,0 mm.

9. Pneumatique de véhicule selon l'une quelconque des revendications 1 à 8, **caractérisé en ce que** chaque entaille (3) se termine en direction axiale à une distance (a₁) de 2,0 mm à 5,0 mm avant les rainures périphériques (2) limitant la bande profilée (1).

10. Pneumatique de véhicule selon l'une quelconque des revendications 1 à 9, **caractérisé en ce que** la bande de roulement présente jusqu'à trois bandes profilées (1).

11. Pneumatique de véhicule selon l'une quelconque des revendications 1 à 10, **caractérisé en ce qu'**une bande profilée (1) s'étend dans la région du zénith de la bande de roulement.
